# EUROPÄISCHE PATENTANMELDUNG

(11) **EP 4 786 123 A1**
(43) Veröffentlichungstag der Anmeldung: **05.08.2026**
(21) Anmeldenummer: 26152578.6
(22) Anmeldetag: 19.01.2026
(51) Int. Cl.: B26D 5/00, A22C 17/00, B26D 5/32, B26D 7/06, B26D 7/14, B26D 7/30, B26D 1/12

(54) **AUFSCHNEIDEMASCHINE**

(30) Priorität: 30.01.2025 DE 102025103514
(71) Anmelder: TVI Entwicklung und Produktion GmbH, 83052 Bruckmühl (DE)
(72) Erfinder: Helfrich, Florian, 83052 Bruckmühl (DE); Meß, Jan, 83052 Bruckmühl (DE)
(74) Vertreter: Weickmann & Weickmann PartmbB

(57) **Zusammenfassung**

Die Erfindung betrifft Aufschneidemaschine (100) zum Aufschneiden wenigstens eines Produkt-Stücks (P), insbesondere eines Fleisch-Stücks, in Scheiben (S), umfassend: eine Pressvorrichtung (102), welche dazu eingerichtet ist, wenigstens ein Produkt-Stück (P) darin aufzunehmen und längs einer ersten Pressrichtung (L) zu pressen und in einem verpressten Zustand einer Schneideinheit (126) zuzuführen, die Schneideinheit (126), welche dazu eingerichtet ist, das wenigstens eine Produkt-Stück (P) in Scheiben (S) aufzuschneiden, und eine Steuereinheit (136), welche betriebsmäßig wenigstens mit der Pressvorrichtung (102) verbunden ist, wobei die Aufschneidemaschine (100) ferner eine Messvorrichtung (119) umfasst, welche ebenfalls betriebsmäßig mit der Steuereinheit (136) verbunden ist und dazu eingerichtet ist, ein gemessenes Gewicht des wenigstens einen Produkt-Stücks (P) zu erfassen, und wobei die Steuereinheit (136) dazu eingerichtet ist, von der Pressvorrichtung (102) Produkt-Stück-Informationen zu erhalten und daraus ein berechnetes Gewicht des wenigstens einen Produkt-Stücks (P) zu bestimmen, wobei die Steuereinheit (136) ferner dazu eingerichtet ist, dann, wenn das gemessene Gewicht um mehr als einen vorbestimmten Betrag von dem berechneten Gewicht abweicht, die Pressvorrichtung (102) derart anzusteuern, dass das Produkt-Stück (P) längs der ersten Pressrichtung (L) zusätzlich gepresst oder entgegen der ersten Pressrichtung (L) entlastet wird.

## Beschreibung

Die Erfindung betrifft eine Aufschneidemaschine zum Aufschneiden wenigstens eines Produkt-Stücks, insbesondere eines Fleisch-Stücks, in Scheiben, umfassend eine Pressvorrichtung, welche dazu eingerichtet ist, wenigstens ein Produkt-Stück darin aufzunehmen und längs einer ersten Pressrichtung zu pressen und in einem verpressten Zustand einer Schneideinheit längs einer Zuführrichtung zuzuführen, die Schneideinheit, welche dazu eingerichtet ist, das wenigstens eine Produkt-Stück in Scheiben aufzuschneiden, und eine Steuereinheit, welche betriebsmäßig wenigstens mit der Pressvorrichtung verbunden ist.

Bereits an dieser Stelle sei darauf hingewiesen, dass die Aufschneidemaschine erfindungsgemäß dazu vorgesehen ist, Produkt-Stücke, vorzugsweise in Form von Lebensmitteln, in Scheiben aufzuschneiden. Das wenigstens eine Produkt-Stück kann dabei beispielsweise aus gewachsenem Fleisch, wie etwa Rindfleisch oder Schweinefleisch, gepresstem Fleisch und dergleichen gebildet sein. Die Schneideinheit kann ein Messer umfassen, welches in einer Schneidebene bewegbar sein kann. Beispielsweise kann das Messer um eine Rotationsachse rotierend antreibbar sein und vorzugsweise während des Rotierens um die Rotationsachse zusätzlich eine translatorische, und vorzugsweise oszillierende, Bewegung in der Schneidebene ausführen. Mittels des Messers können die Scheiben von einem der Schneideinheit zugewandten Ende des wenigstens einen Produkt-Stücks abgetrennt werden.

All dies trifft auch auf die erfindungsgemäße Aufschneidemaschine zu.

Es ist grundsätzlich bekannt, Produkt-Stücke, wie etwa gewachsenes Fleisch, welche/welches einen über ihre/seine Länge unregelmäßigen Querschnitt aufweisen/aufweist, vor einem Aufschneiden mittels der Pressvorrichtung der Aufschneidemaschine zu pressen, um das Produkt-Stück auf vorbestimmte Abmessungen zu bringen, so dass der Querschnitt über die Länge eine möglichst regemäßige Form aufweist. Dies ist erforderlich, um sicherstellen zu können, dass Scheiben einer vorbestimmten Dicke immer auch ein möglichst genau vorhersagbares bzw. ähnliches Gewicht aufweisen, da sie ansonsten in der Lebensmittelindustrie nur schwer vermarktbar sind.

Das Pressen derartiger Produkt-Stücke stellt allerdings regelmäßig eine technische Herausforderung dar, weil die Produkt-Stücke während des Pressvorgangs weder zu stark noch zu schwach gepresst werden dürfen, um ein optimales Aufschneideergebnis zu erzielen.

Es ist daher Aufgabe der Erfindung, hier Abhilfe zu schaffen, insbesondere durch Bereitstellung einer Aufschneidemaschine, bei welcher das Produkt-Stück vor einem Aufschneiden durch die Schneideinheit möglichst optimal gepresst wird, und bei welcher die aus dem Produkt-Stück aufgeschnittenen Scheiben ein Ist-Gewicht aufweisen, welches einem vorbestimmten Soll-Gewicht der Scheiben möglichst nahe kommt.

Diese Aufgabe wird erfindungsgemäß durch eine Aufschneidemaschine der eingangs genannten Art gelöst, welche ferner eine Messvorrichtung umfasst, welche ebenfalls betriebsmäßig mit der Steuereinheit verbunden ist und dazu eingerichtet ist, ein gemessenes Gewicht des wenigstens einen Produkt-Stücks zu erfassen, und bei welcher die Steuereinheit dazu eingerichtet ist, von der Pressvorrichtung Produkt-Stück-Informationen zu erhalten und daraus ein berechnetes Gewicht des wenigstens einen Produkt-Stücks zu bestimmen, wobei die Steuereinheit ferner dazu eingerichtet ist, dann, wenn das gemessene Gewicht um mehr als einen vorbestimmten Betrag von dem berechneten Gewicht abweicht, die Pressvorrichtung derart anzusteuern, dass das Produkt-Stück längs der ersten Pressrichtung zusätzlich gepresst oder entgegen der ersten Pressrichtung entlastet wird. Aufgrund der Tatsache, dass erfindungsgemäß die Steuereinheit dazu eingerichtet ist, das gemessene Gewicht mit dem berechneten Gewicht zu vergleichen und in Abhängigkeit eines Vergleichsergebnisses die Pressvorrichtung derart anzusteuern, dass das Produkt-Stück zusätzlich gepresst oder entlastet wird, ist es möglich, dass das Produkt-Stück vor einem Aufschneiden durch die Schneideinheit möglichst optimal gepresst wird und die aus dem Produkt-Stück aufgeschnittenen Scheiben ein Ist-Gewicht aufweisen, welches einem vorbestimmten Soll-Gewicht der Scheiben möglichst nahe kommt.

Es ist der Verdienst des Erfinders, erkannt zu haben, dass beispielsweise ein zu starkes Pressen mittels der Pressvorrichtung zu einem unkontrollierten nachträglichen Aufquillen des Produkt-Stücks oder zu einem unkontrollierten Herausquellen aus der Pressvorrichtung führen kann, was genau dann der Fall sein kann, wenn das berechnete Gewicht geringer als das mittels der Messvorrichtung erfasste Gewicht ist. Ein zu geringes Pressen des Produkt-Stücks kann hingegen zu Lufteinschlüssen oder dergleichen in der Pressvorrichtung führen, was wiederum bewirken kann, dass das berechnete Gewicht höher als das mittels der Messvorrichtung erfasste Gewicht ist.

Der vorbestimmte Betrag kann beispielsweise eine prozentuale Abweichung zwischen dem gemessenen Gewicht und dem berechneten Gewicht sein. Der vorbestimmte Betrag kann beispielsweise in einem Bereich von 0 % bis 5 %, vorzugsweise in einem Bereich von 0 % bis 1 %, liegen.

Die Messvorrichtung kann vor der Pressvorrichtung angeordnet oder in diese integriert sein. Ferner kann die Messvorrichtung vorzugsweise dazu eingerichtet sein, das gemessene Gewicht vor einem Aufschneiden des wenigstens einen Produkt-Stücks mit der Schneideinheit zu bestimmen.

Grundsätzlich können aus den mittels der Schneideinheit aufgeschnittenen Scheiben, insbesondere mittels eines Portioniermittels der Aufschneidemaschine, wie beispielsweise einem Portionierband, Portionen gebildet werden. Hierbei kann eine Portion eine oder mehrere Scheiben umfassen.

Vorzugsweise kann die Steuereinheit ferner dazu eingerichtet sein, dann, wenn das gemessene Gewicht um mehr als den vorbestimmten Betrag von dem berechneten Gewicht abweicht, die Pressvorrichtung derart anzusteuern, dass das gemessene Gewicht im Wesentlichen, vorzugsweise exakt, dem berechneten Gewicht entspricht. Hierdurch kann ein "vollständiges Entlasten" des wenigstens einen Produkt-Stücks erreicht werden, so dass ein Ist-Gewicht der aufgeschnittenen Scheiben entsprechend in Abhängigkeit einer Dicke einer jeweiligen Scheibe besonders genau abgeschätzt werden kann.

Die Produkt-Stück-Informationen können grundsätzlich beliebige zur Bestimmung des Gewichtes des Produkt-Stücks geeignete Informationen umfassen. Sofern beispielsweise der Querschnitt, insbesondere eine Breite und eine Höhe oder ein Durchmesser des wenigstens einen Produkt-Stücks in der Pressvorrichtung bekannt sind, können die Produkt-Stück-Informationen wenigstens eine Abmessung des wenigstens einen Produkt-Stücks im gepressten Zustand längs der ersten Pressrichtung umfassen. Sofern, beispielsweise in einer mit der Steuereinheit verbundenen Speichereinheit, eine Dichte des wenigstens einen Produkt-Stücks hinterlegt ist, kann die Steuereinheit aus den Abmessungen des wenigstens einen Produkt-Stücks zunächst ein Volumen und hieraus wiederum das berechnete Gewicht des Produkt-Stücks bestimmen. Die Dichte kann dabei vorzugsweise in Abhängigkeit des jeweils aufzuschneidenden Produkt-Stücks, d.h. des Produkt-Stück-Materials wie Fleisch, Fisch und dergleichen, variabel anpassbar sein.

Um die Abmessung des Produkt-Stücks auch entlang wenigstens einer weiteren Richtung beeinflussen zu können, kann gemäß einem bevorzugten Ausführungsbeispiel die Pressvorrichtung ferner dazu eingerichtet sein, das wenigstens eine Produkt-Stück längs einer zweiten Pressrichtung zu pressen, welche vorzugsweise im Wesentlichen orthogonal zu der ersten Pressrichtung verläuft.

Gemäß einer Weiterbildung des letztgenannten Ausführungsbeispiels kann bei einer Abweichung zwischen dem gemessenen Gewicht und dem berechneten Gewicht die Steuereinheit dazu eingerichtet ist, dann, wenn das gemessene Gewicht um mehr als den vorbestimmten Betrag von dem berechneten Gewicht abweicht, die Pressvorrichtung derart anzusteuern, dass das Produkt-Stück längs der ersten Pressrichtung und/oder der zweiten Pressrichtung zusätzlich gepresst oder entgegen der ersten Pressrichtung und/oder der zweiten Pressrichtung entlastet wird. Dementsprechend kann das wenigstens eine Produkt-Stück nicht nur in der ersten Pressrichtung, sondern zusätzlich oder alternativ auch in der zweiten Pressrichtung gepresst oder entlastet werden.

Soll das Produkt-Stück schließlich vorzugsweise in allen drei Raumrichtungen gepresst werden, was auch als sogenanntes 3D-Pressen bezeichnet werden kann, wird vorgeschlagen, dass die Pressvorrichtung ferner dazu eingerichtet ist, das wenigstens eine Produkt-Stück längs einer dritten Pressrichtung zu pressen, welche vorzugsweise im Wesentlichen orthogonal zu der ersten Pressrichtung und/oder zu der zweiten Pressrichtung verläuft.

Folglich kann in Weiterbildung des letztgenannten Ausführungsbeispiels die Steuereinheit dazu eingerichtet sein, dann, wenn das gemessene Gewicht um mehr als den vorbestimmten Betrag von dem berechneten Gewicht abweicht, die Pressvorrichtung derart anzusteuern, dass das Produkt-Stück längs der ersten Pressrichtung und/oder der zweiten Pressrichtung und/oder der dritten Pressrichtung zusätzlich gepresst oder entgegen der ersten Pressrichtung und/oder der zweiten Pressrichtung und/oder der dritten Pressrichtung entlastet wird.

Zur Steuerung einer jeweiligen Pressbewegung einer oder mehrerer Presseinheiten, beispielsweise eines oder mehrerer Pressstempel, der Pressvorrichtung, kann die Pressvorrichtung dazu eingerichtet sein, das wenigstens eine Produkt-Stück mit einer vorbestimmten ersten Kraft entlang der ersten Pressrichtung und/oder mit einer vorbestimmten zweiten Kraft entlang der zweiten Pressrichtung und/oder mit einer vorbestimmten dritten Kraft entlang der dritten Pressrichtung zu pressen, bevor die Steuereinheit eine Abweichung zwischen dem gemessenen Gewicht und dem erfassten Gewicht bestimmt. Ein solchen Pressen kann auch als "kraftgesteuertes Pressen" bezeichnet werden. Alternativ kann für jede der Pressrichtungen auch ein vorbestimmter Pressweg entlang der jeweiligen Pressrichtung vorgegeben sein, welcher durch eine jeweilige Presseinheit auszuführen ist.

Gemäß einer Weiterbildung des letztgenannten Ausführungsbeispiels kann die Pressvorrichtung dazu eingerichtet sein, das wenigstens eine Produkt-Stück so lange mit der vorbestimmten ersten Kraft entlang der ersten Pressrichtung und/oder mit der vorbestimmten zweiten Kraft entlang der zweiten Pressrichtung und/oder mit der vorbestimmten dritten Kraft entlang der dritten Pressrichtung zu pressen, bis sich eine Abmessung des wenigstens einen Produkt-Stücks entlang der ersten Pressrichtung und/oder entlang der zweiten Pressrichtung und/oder entlang der dritten Pressrichtung nur noch maximal um einen vorbestimmten Betrag pro Zeiteinheit ändert. Die vorstehend beschriebene Funktionsweise kann auch als "gradientengesteuertes Pressen" bezeichnet werden. In anderen Worten kann das wenigstens eine Produkt-Stück vorzugsweise nur so lange entlang der jeweiligen Pressrichtung gepresst werden, bis sich die Abmessung des jeweiligen Produkt-Stücks und/oder eine Position einer Presseinheit, wie beispielsweise eines Presstempels, der Pressvorrichtung nur noch sehr geringfügig pro Zeiteinheit ändert und im Anschluss kann die Pressvorrichtung vorzugsweise das Pressen entlang der jeweiligen Pressrichtung beenden.

Ferner kann die Pressvorrichtung eine erste Presseinheit umfassen, welche dazu eingerichtet ist, das wenigstens eine Produkt-Stück längs der ersten Pressrichtung zu pressen, und/oder eine zweite Presseinheit umfassen, welche dazu eingerichtet ist, das wenigstens eine Produkt-Stück längs der zweiten Pressrichtung zu pressen, und/oder eine dritte Presseinheit umfassen, welche dazu eingerichtet ist, das wenigstens eine Produkt-Stück längs der dritten Pressrichtung zu pressen. Jede der Presseinheiten kann als ein Pressstempel oder dergleichen ausgebildet sein.

Darüber hinaus kann die Pressvorrichtung in an sich bekannter Weise ein Formrohr umfassen, welches dazu eingerichtet ist, das wenigstens eine Produkt-Stück darin aufzunehmen.

Gemäß einer Weiterbildung kann das Formrohr wenigstens zwei Formrohrhälften umfassen, nämlich eine erste Formrohrhälfte und eine der ersten Formrohrhälfte entgegengesetzt anordenbare zweite Formrohrhälfte, wobei die erste Formrohrhälfte relativ zu der zweiten Formrohrhälfte bewegbar sein kann oder umgekehrt. Vorzugsweise kann die erste Formrohrhälfte dabei im Wesentlichen C-förmig ausgebildet sein und/oder die zweite Formrohrhälfte im Wesentlichen U-förmig ausgebildet sein oder umgekehrt.

Schließlich kann gemäß noch einer bevorzugten Weiterbildung das Formrohr eine Presseinheit, vorzugsweise die zweite Presseinheit, der Pressvorrichtung bilden.

Nachzutragen ist noch, dass die Aufschneidemaschine ferner eine Portioniervorrichtung, beispielsweise ein Portionierband, umfassen kann, welche dazu eingerichtet ist, Portionen aus den von der Schneideinheit aufgeschnittenen Scheiben zu bilden und die Portionen längs einer Abförderrichtung abzufördern. Ferner kann jede Portion eine oder mehrere Scheiben umfassen.

Ferner kann die Messvorrichtung gemäß einem Ausführungsbeispiel als eine Wiegevorrichtung ausgebildet sein. Eine solche Wiegevorrichtung kann das gemessene, d.h. tatsächliche, Gewicht des Produkt-Stücks gemäß dem Prinzip einer Waage messen.

Alternativ kann die Messvorrichtung als eine Scan-Vorrichtung ausgebildet sein. Mittels einer solchen Scan-Vorrichtung, welche beispielsweise als ein Röntgenscanner oder dergleichen ausgebildet sein kann, kann beispielsweise ein Volumen des Produkt-Stücks bestimmt und bei bekannter Dichte des Produkt-Stücks ebenfalls das gemessene, d.h. tatsächliche, Gewicht des Produkt-Stücks bestimmt werden, welches mit dem an der Pressvorrichtung berechneten Gewicht verglichen werden kann.

Die Erfindung wird im Folgenden anhand der beigefügten Zeichnung an Ausführungsbeispielen näher erläutert werden. Es stellen dar:
- Figur 1a: eine perspektivische Ansicht einer erfindungsgemäßen Aufschneidemaschine gemäß einem Ausführungsbeispiel,
- Figur 1b: eine Seitenansicht der Aufschneidemaschine gemäß Figur 1a,
- Figur 2a: eine perspektivische Ansicht von Teilen einer Pressvorrichtung und einer Schneideinheit der Aufschneidemaschine gemäß Figur 1a,
- Figur 2b: eine geschnittene Seitenansicht entsprechend Figur 2a,
- Figur 2c: eine Seitenansicht von Komponenten der Aufschneidemaschine gemäß Figur 1a, bei welcher sich eine untere Formrohrhälfte der Pressvorrichtung in einer heraufgeschwenkten Aufschneidestellung befindet, und
- Figur 2d: eine weitere Seitenansicht entsprechend Figur 2c, bei welcher sich die untere Formrohrhälfte in einer herabgeschwenkten Beladestellung befindet, und
- Figur 3: eine schematische Schnittansicht, welche eine Ist-Abmessung und eine Soll-Abmessung eines Produkt-Stücks in einem gepressten Zustand schematisch darstellt.

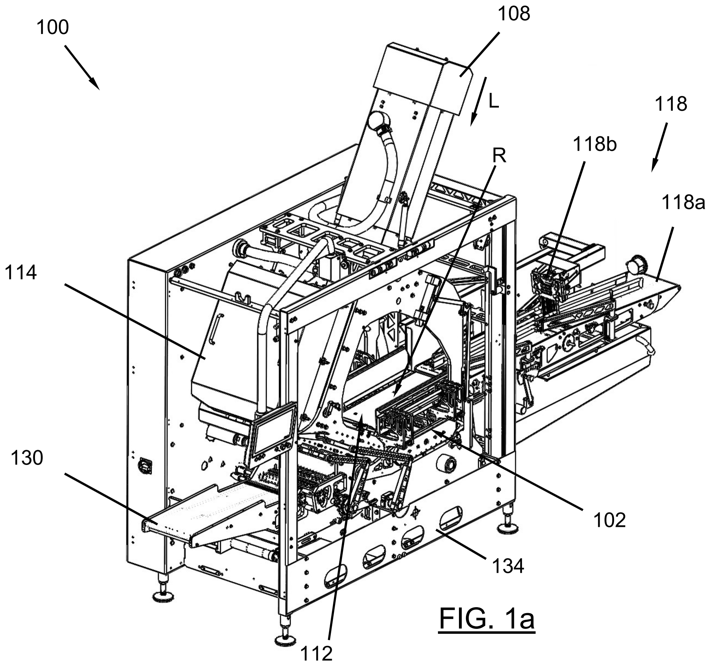

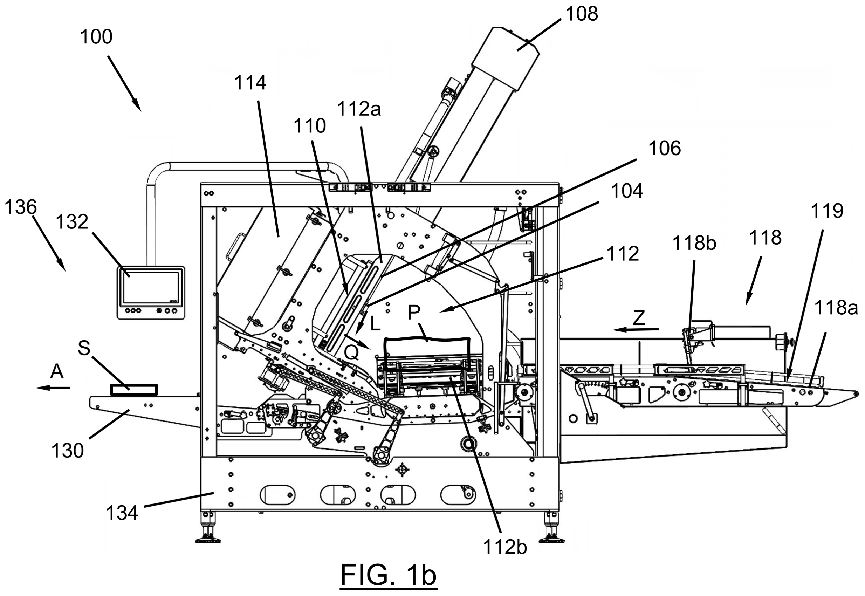

In den Figuren 1a und 1b ist ein Ausführungsbeispiel einer erfindungsgemäßen Aufschneidemaschine allgemein durch das Bezugszeichen 100 gekennzeichnet.

Die Aufschneidemaschine 100 umfasst eine Pressvorrichtung 102, welche darin einen Pressraum R definiert, welcher dazu ausgebildet und bestimmt ist, ein Produkt-Stück P, beispielsweise in Form eines Lebensmittels wie gewachsenen Fleisch oder Fisch oder dergleichen, aufzunehmen. Das Produkt-Stück P ist dabei in Figur 1a nicht dargestellt, jedoch beispielsweise in Figur 1b schematisch eingezeichnet.

Die Pressvorrichtung 102 umfasst eine erste Presseinheit 104, welche in dem vorliegenden Ausführungsbeispiel als eine Längspresseinheit in Form eines Längspressstempels ausgeführt ist. Der Längspressstempel 104 ist dazu eingerichtet, eine Abmessung des Pressraumes R in einer ersten Pressrichtung L zu beeinflussen, um das Produkt-Stück P in der ersten Pressrichtung L zu pressen. Die erste Pressrichtung L ist dabei vorliegend eine Längsrichtung des Produkt-Stücks P oder eine hierzu im Wesentlichen parallele Richtung. Hierzu kann der Längspressstempel 104 über eine Kolbenstange 106 mit einer Längspressantriebseinheit 108 verbunden sein, welche dazu eingerichtet ist, den Längspressstempel 104 in und entgegen der Längsrichtung L zu bewegen, um das Produkt-Stück P auf eine gewünschte Länge in der Längsrichtung L zu bringen.

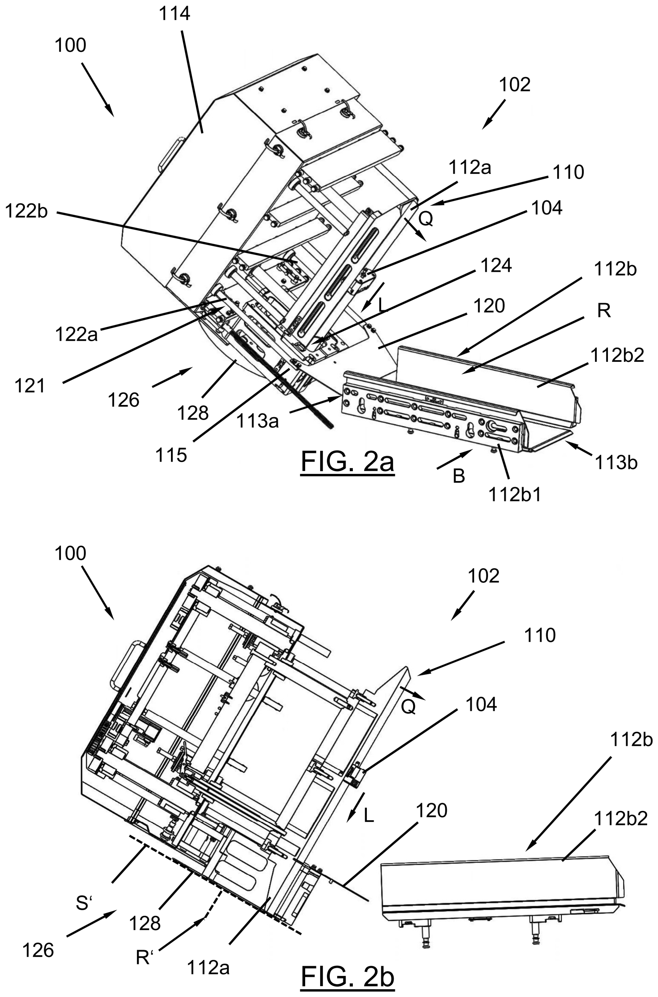

Die Pressvorrichtung 102 umfasst ferner eine zweite Presseinheit 110 in Form einer Querpresseinheit, welche dazu eingerichtet ist, eine Abmessung des Pressraumes R in einer zweiten Pressrichtung Q zu pressen. Die zweite Pressrichtung Q ist dabei vorliegend eine zu der Längsrichtung L im Wesentlichen orthogonale Querrichtung des Produkt-Stücks P. In dem dargestellten Ausführungsbeispiel umfasst die Querpresseinheit 110 dabei ein Formrohr 112 mit einer ersten oberen Formrohrhälfte 112a, welche mittels einer Querantriebseinheit 114, beispielsweise in Form einer servomotorischen oder hydraulischen oder pneumatischen Querantriebseinheit, in und entgegen der Querrichtung Q verlagerbar ist. Die obere Formrohrhälfte 112a ist dabei beispielsweise auch in den Figuren 2a bis 2d erkennbar, wobei insbesondere aus Figur 1a ersichtlich ist, dass die obere Formrohrhälfte 112a, gesehen in der Längsrichtung **L,** einen im Wesentlichen C-förmigen Querschnitt aufweist.

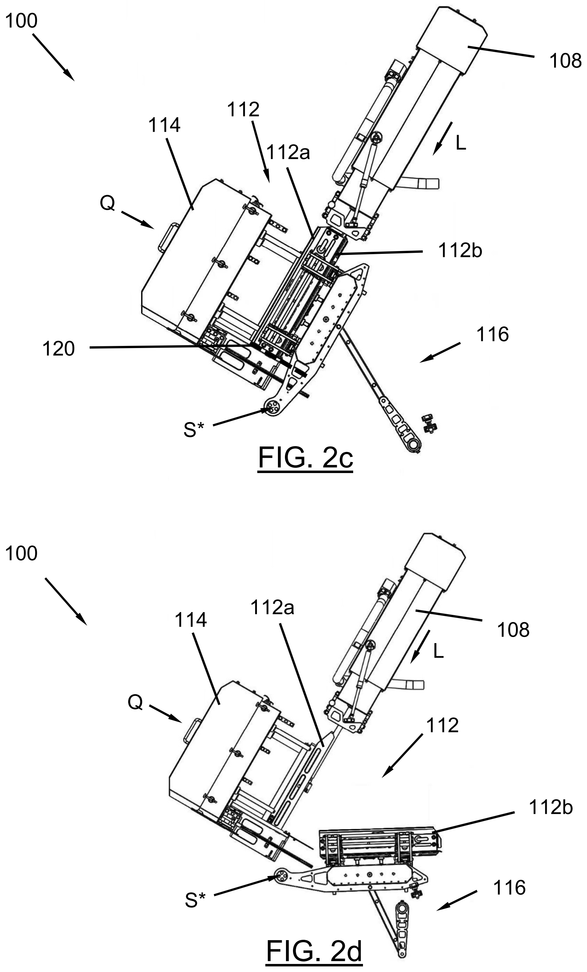

Das Formrohr 112 weist dabei in dem dargestellten Ausführungsbeispiel ferner eine zweite untere Formrohrhälfte 112b auf, welche mittels einer Schwenkeinheit in Form eines Schwenkmechanismus 126 um eine Schwenkachse S* (siehe beispielsweise Figur 2c) schwenkbar ist. In den Figuren 1a, 1b, 2a, 2b und 2d ist die untere Formrohrhälfte 112b dabei in einer herabgeklappten Beladestellung gezeigt, in welcher das Produkt-Stück P mit einer Beladevorrichtung 118 (siehe Figuren 1a und 1b) in Zuführrichtung Z auf die untere Formrohrhälfte 112b befördert werden kann. Die Beladevorrichtung 118 kann hierzu beispielsweise einen Bandförderer 118a und/oder eine Vorschubeinrichtung 118b, beispielsweise in Form eines Vorschubstempels 118b oder dergleichen, umfassen. Das Formrohr 112 kann dabei, in einem Aufschneidebetrieb der Aufschneidemaschine 100, eine der Schneideinheit 126 zugewandte Öffnung 113a und eine der Längspresseinheit 104 zugewandte weitere Öffnung 113b aufweisen.

In Figur 2c ist die untere Formrohrhälfte 112b hingegen in einer Aufschneidestellung gezeigt, in welcher die untere Formrohrhälfte 112b der oberen Formrohrhälfte 112a zugewandt ist und ausgehend von der in Figur 2d gezeigten Beladestellung um die Schwenkachse S* mittels des Schwenkmechanismus 116 hochgeklappt worden ist. Sobald sich die untere Formrohrhälfte 112b in der in Figur 2c gezeigten Aufschneidestellung befindet, kann die obere Formrohrhälfte 112a mittels der Querpresseinheit 110 so weit in der Querrichtung Q in Richtung des Produkt-Stücks P verlagert werden, bis das Produkt-Stück P eine gewünschte Abmessung in der Querrichtung Q aufweist. Anschließend oder im Wesentlichen gleichzeitig kann das Produkt-Stück P durch Bewegen des Längspressstempels 104 (siehe beispielsweise Figuren 2a und 2b) in der Längsrichtung L auf eine gewünschte Abmessung in der Längsrichtung L gebracht werden.

Bei dem Pressen in der Längsrichtung L mittels des Längspressstempels 104 kann eine Anschlageinheit 120, beispielsweise in Form eines Zwischenblechs, als Gegenhalter dienen. Hierzu kann die Anschlageinheit 120 mittels einer Anschlagantriebeinheit 121, welche nachstehend näher beschrieben werden wird, vorzugsweise in und entgegen der Querrichtung Q verlagerbar sein und zwischen einer in Figur 2a gezeigten Freigabestellung, in welcher sie einen Schneidkanal 124 freigibt, und einer in Figur 2c lediglich schematisch durch eine gestrichelte Linie angedeutete Begrenzungsstellung verlagert werden, in welcher die Anschlageinheit 120 den Schneidkanal 124 wenigstens teilweise blockiert. Um in die Begrenzungsstellung verlagert zu werden, insbesondere bei einem Pressvorgang des Produkt-Stücks P mit der Pressvorrichtung 102, kann die Anschlageinheit 120 mittels der Anschlagantriebeinheit 121 ausgehend von Figur 2a um einen vorbestimmten Betrag entgegen der Querrichtung Q verlagert werden.

Nachdem das Produkt-Stück P auf gewünschte Abmessungen in der Längsrichtung L und der Querrichtung Q gepresst worden ist, kann die Anschlageinheit 120 entsprechend wieder in die in Figur 2a dargestellte Stellung bewegt werden und anschließend das Produkt-Stück P durch eine weitere Bewegung des Längspressstempels 104 in der Längsrichtung L durch den Schneidkanal 124 hindurch zu einer Schneideinheit 126 der Aufschneidemaschine 100 bewegt werden. Die Schneideinheit 126 ist der Pressvorrichtung 102 benachbart angeordnet, insbesondere in Bezug auf die Längsrichtung L oder die Zuführrichtung Z stromabwärts der Pressvorrichtung 102 angeordnet, und umfasst ein Messer 128, welches um eine Rotationsachse R' rotierbar sein kann, um das Produkt-Stück P in Scheiben S (siehe beispielsweise Figur 1b) aufzuschneiden. Die Rotationsachse R' des Messers 128 ist dabei beispielsweise in Figur 2b schematisch angedeutet. Das Messer 128 kann vorzugsweise dazu eingerichtet sein, zusätzlich zu einer Rotationsbewegung um die Rotationsachse R' eine Oszillationsbewegung in bzw. entgegen der Querrichtung Q durchzuführen. Während der Oszillationsbewegung kann das Messer 128 zwischen einer zurückgezogenen Stellung, in welcher das Messer 128 den Schneidkanal 124 im Wesentlichen freigibt, und einer vorgerückten Stellung bewegt werden, in welcher das Messer 128 ausgehend von Figur 2a in der Querrichtung Q bewegt wird, um den Schneidkanal 124 zu durchdringen, um eine Scheibe S von dem Produkt-Stück P abschneiden zu können. Solange sich das Messer 128 in der zurückgezogenen Stellung befindet, kann das Produkt-Stück P jeweils um einen vorbestimmten Betrag entsprechend einer gewünschten Scheibendicke der jeweiligen Scheibe S in der Längsrichtung L vorgeschoben werden.

Um das Produkt-Stück P vor dem Aufschneiden vorzugsweise in allen drei Raumrichtungen, d.h. in drei Dimensionen, pressen zu können, können vorzugsweise auch seitliche Begrenzungswände 112b1 und 112b2 der unteren Formrohrhälfte 112b eine dritte Presseinheit bilden und in einer Breitenrichtung B, welche eine dritte Pressrichtung darstellen kann, aufeinander zu und voneinander weg bewegbar angeordnet sein. Hierdurch kann vor einem Aufschneiden durch die Schneideinheit 126 eine Abmessung des Produkt-Stücks P in der Breitenrichtung B auf ein gewünschtes Maß gebracht werden.

Nachdem die Scheiben S mittels der Schneideinheit 126 aufgeschnitten worden sind, können diese mittels einer Abfördereinheit 130, welche beispielsweise ebenfalls als ein Bandförderer oder dergleichen ausgebildet sein kann, entlang einer Abförderrichtung A aus der Aufschneidemaschine 100 abgefördert werden, um beispielsweise weiter verarbeitet und/oder verpackt werden zu können.

Ferner kann der Anschlageinheit 120 die Anschlagantriebseinheit 121 zugeordnet sein, welche dazu eingerichtet ist, die Anschlageinheit 120 zwischen der Begrenzungsstellung und der Freigabestellung zu verlagern. Die Anschlagantriebseinheit 121 umfasst dabei in dem dargestellten Ausführungsbeispiel zwei Antriebselemente 122, welche in dem dargestellten Ausführungsbeispiel als Schubstangen 122a und 122b ausgebildet sind, welche auf entgegengesetzten Seiten der Pressvorrichtung 102 und außerhalb des Schneidkanals 124 der Schneideinheit 126 angeordnet sind.

Ferner umfasst in dem dargestellten Ausführungsbeispiel die Schneideinheit 126 eine Schneidaufnahmeeinheit 115, welche beispielsweise als eine Schneidplatte ausgebildet sein kann. Die Schneidaufnahmeeinheit 115 ist gemäß dem dargestellten Ausführungsbeispiel dazu eingerichtet, wenigstens ein der Schneideinheit 126 zugewandtes Ende des Produkt-Stücks P aufzunehmen, wobei die Schneidaufnahmeeinheit 115 darin wenigstens teilweise den Schneidkanal 124 definiert, durch welchen das Produkt-Stück P zu der Schneideinheit 126 führbar ist. Vorzugsweise ist dabei wenigstens ein Teil des Schneidkanals 124 durch die Querpresseinheit 110, in dem dargestellten Ausführungsbeispiel durch die obere Formrohrhälfte 112a definiert, welche sich bis unmittelbar vor die Schneideinheit 126, insbesondere die Schneidebene S' des Messers 128 erstreckt.

Zur Bedienung der Aufschneidemaschine 100 kann die Aufschneidemaschine 100 ferner eine Bedieneinheit 132 umfassen, welche an einem Rahmen 134 der Aufschneidemaschine 100 angeordnet sein kann und dazu eingerichtet sein kann, durch einen Bediener der Aufschneidemaschine 100 bedient zu werden. Die Bedieneinheit 132 kann beispielsweise als ein Touchscreen oder dergleichen ausgebildet sein. Die Bedieneinheit 132 kann Bestandteil einer Steuereinheit 136 der Aufschneidemaschine 100 sein, welche in Fig. 1b lediglich durch ein entsprechendes Bezugszeichen angedeutet ist. Die Steuereinheit 136 kann dabei in einem Gehäuse der Bedieneinheit 132 und/oder an andere Stelle an dem Rahmen 134 oder diesem benachbart angeordnet sein. Die Steuereinheit 136 ist dabei wenigstens mit der Pressvorrichtung 102 und vorzugsweise auch mit der Schneideinheit 126 betriebsmäßig verbunden.

Eine erfindungsgemäße Besonderheit der Aufschneidemaschine 100 besteht darin, dass die Aufschneidemaschine 100 ferner eine Messvorrichtung 119 umfasst, welche ebenfalls betriebsmäßig mit der Steuereinheit 136 verbunden ist und dazu eingerichtet ist, ein gemessenes Gewicht des wenigstens einen Produkt-Stücks P zu erfassen. Die Messvorrichtung 119 kann dabei beispielsweise in dem Bandförderer 118a integriert sein und ist dementsprechend nur durch das entsprechende Bezugszeichen angedeutet, wobei der Bandförderer 118a beispielsweise als ein Wiegeband ausgebildet sein kann. Die Messvorrichtung 119 kann jedoch auch dem Bandförderer 118a vorgelagert oder nachgelagert angeordnet sein, jedoch vorzugsweise in der Zuführrichtung Z vor der Pressvorrichtung 102.

Die Messvorrichtung 119 ist dazu eingerichtet, ein gemessenes Gewicht des Produkt-Stücks P zu erfassen, d.h., sofern die Messvorrichtung 119 als eine Wiegevorrichtung ausgebildet ist, das Gewicht des Produkt-Stücks P gemäß dem Prinzip einer Waage tatsächlich zu messen. Alternativ kann die Messvorrichtung 119, gemäß einem nicht näher dargestellten Ausführungsbeispiel, als eine Scan-Vorrichtung ausgebildet sein. Mittels einer solchen Scan-Vorrichtung, welche beispielsweise als ein Röntgenscanner oder dergleichen ausgebildet sein kann, kann beispielsweise ein Volumen des Produkt-Stücks P bestimmt und bei bekannter Dichte des Produkt-Stücks P ebenfalls das gemessene, d.h. tatsächliche, Gewicht des Produkt-Stücks P bestimmt werden. Die Steuereinheit 136 ist dabei erfindungsgemäß ferner dazu eingerichtet, von der Pressvorrichtung 102 Produkt-Stück-Informationen zu erhalten, wobei die Produkt-Stück-Informationen wenigstens eine Abmessung x (siehe beispielsweise Fig. 1b) des wenigstens einen Produkt-Stücks P im gepressten Zustand längs der ersten Pressrichtung L umfassen können. Die Abmessung x kann dabei beispielsweise aus einer Lage der ersten Pressvorrichtung 104 in der Zuführrichtung Z bestimmt werden. Zur Bestimmung der Lage bzw. Position einer jeweiligen Pressvorrichtung kann wenigstens der ersten Pressvorrichtung 104, und vorzugweise auch der zweiten und der dritten Pressvorrichtung, eine entsprechende in den Figuren nicht dargestellte Sensoreinheit zugeordnet sein, welche mit der Steuereinheit 136 in Signalverbindung stehen kann.

Sofern also beispielsweise eine Höhe, d.h. eine Erstreckung des Produkt-Stücks P in Querrichtung Q, und eine Breite, d.h. eine Erstreckung des Produkt-Stücks P in der Breitenrichtung B, bekannt ist, beispielsweise weil diese beiden im gepressten Zustand zu erreichenden Abmessungen bei einem jeweiligen Pressvorgang fest vorgegeben sind, kann die Steuereinheit 136 mithilfe der weiteren Abmessung x zusammen mit einer in einer Speichereinheit der Steuereinheit 136 hinterlegten Dichte des Produkt-Stücks P ein berechnetes Gewicht des Produkt-Stücks P bestimmen. Das Gewicht bzw. die Masse, aus welcher entsprechend das Gewicht ermittelbar ist, ergibt sich dabei bekanntermaßen aus der Multiplikation der Dichte mit dem Volumen, wobei letzteres zumindest näherungsweise aus dem Produkt der Abmessung x, der Höhe und der Breite des Produkt-Stücks P bestimmt werden kann.

Die Steuereinheit 136 ist dabei erfindungsgemäß ferner dazu eingerichtet, dann, wenn das gemessene Gewicht um mehr als einen vorbestimmten Betrag, welcher beispielsweise in einem Bereich von 0% bis 5% liegen kann, von dem berechneten Gewicht abweicht, die Pressvorrichtung 102 derart anzusteuern, dass das Produkt-Stück P längs der ersten Pressrichtung L zusätzlich gepresst oder entgegen der ersten Pressrichtung L entlastet wird. Mittels des Vergleichs des berechneten Gewichts und des gemessenen Gewichts kann also ermittelt werden, ob das Produkt-Stück P in einem zu geringen oder aber in einem zu hohen Maße gepresst worden ist. Sofern das Produkt-Stück P beispielsweise zu gering gepresst worden ist und ein zusätzliches Pressen erforderlich ist, können Lufteinschlüsse in dem Formrohr 112 bzw. dem Pressraum R vorliegen, was dazu führen kann, dass das berechnete Gewicht des Produkt-Stücks P höher als das mittels der Messvorrichtung 119 erfasste Gewicht sein kann. Umgekehrt kann in einem Fall, in welchem das berechnete Gewicht geringer als das mittels der Messvorrichtung 119 gemessene Gewicht ist, ein zu starkes Pressen des Produkt-Stücks P mittels der Pressvorrichtung 102 vorliegen, so dass ein Entlasten des Produkt-Stücks P erfolgen sollte.

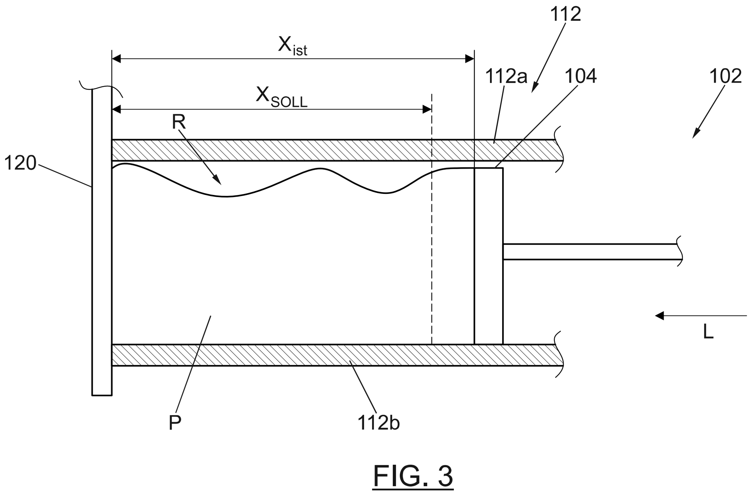

Das vorstehend erläuterte Prinzip ist auch nochmals in Figur 3 dargestellt, welche eine schematische Ansicht des Produkt-Stücks P darstellt, welches von der ersten Presseinheit 104 in Form des Längspressstempels auf eine Abmessung xᵢₛₜ in Längsrichtung L gepresst worden ist. Wie in Figur 3 erkennbar, sind in dem Pressraum R innerhalb des Formrohrs 112 einige Lufteinschlüsse vorhanden, was für ein zu geringes Pressen des Produkt-Stücks P in der Längsrichtung L spricht. Dies kann erfindungsgemäß dadurch bestimmt werden, dass aus der tatsächlichen Abmessung xᵢₛₜ ein berechnetes Gewicht des Produkt-Stücks P berechnet wird, welches höher als ein mittels der Messvorrichtung 119 bestimmtes gemessenes Gewicht des Produkt-Stücks P ist. In dem in Figur 3 dargestellten Fall kann die Steuereinheit 136 die Pressvorrichtung 102 entsprechend derart ansteuern, dass das Produkt-Stück P längs der ersten Pressrichtung L zusätzlich gepresst wird, bis es die Abmessung xₛₒₗₗ in der ersten Pressrichtung L erreicht, bei welcher das gemessene Gewicht im Wesentlichen, vorzugsweise exakt, dem berechneten Gewicht entspricht.

Analog zu der in Figur 3 dargestellten Vorgehensweise, kann dies entsprechend auch auf die zweite Pressrichtung Q und/oder die dritte Pressrichtung B angewandt werden.

Zur Steuerung einer jeweiligen Pressbewegung der ersten Presseinheit 104 und/oder der zweiten Presseinheit 110 und/oder der dritten Presseinheit, welche hier durch die Begrenzungswände 112b1 und 112b2 gebildet ist, kann die Pressvorrichtung 102 dazu eingerichtet sein, das wenigstens eine Produkt-Stück P mit einer vorbestimmten ersten Kraft entlang der ersten Pressrichtung L und/oder mit einer vorbestimmten zweiten Kraft entlang der zweiten Pressrichtung Q und/oder mit einer vorbestimmten dritten Kraft entlang der dritten Pressrichtung B zu pressen, bevor die Steuereinheit 136 eine Abweichung zwischen dem gemessenen Gewicht und dem erfassten Gewicht bestimmt. Es ist also denkbar, das Produkt-Stück P in der jeweiligen Pressrichtung zunächst immer mit einer vorbestimmten Kraft zu pressen und dann zu bestimmen, ob etwaige Korrekturmaßnahmen in Form eines zusätzlichen Pressens oder eines Entlastens in einer entsprechenden Pressrichtung erforderlich sind.

Gemäß einem bevorzugten Ausführungsbeispiel kann dabei das wenigstens eine Produkt-Stück P so lange mit der vorbestimmten ersten Kraft entlang der ersten Pressrichtung L und/oder mit der vorbestimmten zweiten Kraft entlang der zweiten Pressrichtung Q und/oder mit der vorbestimmten dritten Kraft entlang der dritten Pressrichtung B gepresst werden, bis sich eine Abmessung, beispielsweise die Abmessung xᵢₛₜ des wenigstens einen Produkt-Stücks P entlang der ersten Pressrichtung L und/oder entlang der zweiten Pressrichtung Q und/oder entlang der dritten Pressrichtung B nur noch maximal um einen vorbestimmten Betrag pro Zeiteinheit ändert. Wenn sich beispielsweise der Pressstempel 104 nur noch sehr langsam in der ersten Pressrichtung L bewegt, kann dementsprechend das Pressen entlang der ersten Pressrichtung L beendet werden und in der vorstehend beschriebenen Weise bestimmt werden, ob ein zusätzliches Pressen oder ein Entlasten des Produkt-Stücks P erforderlich ist oder nicht.

## Patentansprüche

1. Aufschneidemaschine (100) zum Aufschneiden wenigstens eines Produkt-Stücks (P), insbesondere eines Fleisch-Stücks, in Scheiben (S), umfassend:
eine Pressvorrichtung (102), welche dazu eingerichtet ist, wenigstens ein Produkt-Stück (P) darin aufzunehmen und längs einer ersten Pressrichtung (L) zu pressen und in einem verpressten Zustand einer Schneideinheit (126) zuzuführen,
die Schneideinheit (126), welche dazu eingerichtet ist, das wenigstens eine Produkt-Stück (P) in Scheiben (S) aufzuschneiden, und
eine Steuereinheit (136), welche betriebsmäßig wenigstens mit der Pressvorrichtung (102) verbunden ist,
**dadurch gekennzeichnet, dass** die Aufschneidemaschine (100) ferner eine Messvorrichtung (119) umfasst, welche ebenfalls betriebsmäßig mit der Steuereinheit (136) verbunden ist und dazu eingerichtet ist, ein gemessenes Gewicht des wenigstens einen Produkt-Stücks (P) zu erfassen, und
dass die Steuereinheit (136) dazu eingerichtet ist, von der Pressvorrichtung (102) Produkt-Stück-Informationen zu erhalten und daraus ein berechnetes Gewicht des wenigstens einen Produkt-Stücks (P) zu bestimmen, wobei die Steuereinheit (136) ferner dazu eingerichtet ist, dann, wenn das gemessene Gewicht um mehr als einen vorbestimmten Betrag von dem berechneten Gewicht abweicht, die Pressvorrichtung (102) derart anzusteuern, dass das Produkt-Stück (P) längs der ersten Pressrichtung (L) zusätzlich gepresst oder entgegen der ersten Pressrichtung (L) entlastet wird.

2. Aufschneidemaschine nach Anspruch 1,
**dadurch gekennzeichnet, dass** die Steuereinheit (136) ferner dazu eingerichtet ist, dann, wenn das gemessene Gewicht um mehr als den vorbestimmten Betrag von dem berechneten Gewicht abweicht, die Pressvorrichtung (102) derart anzusteuern, dass das gemessene Gewicht im Wesentlichen, vorzugsweise exakt, dem berechneten Gewicht entspricht.

3. Aufschneidemaschine nach Anspruch 1 oder 2,
**dadurch gekennzeichnet, dass** die Produkt-Stück-Informationen wenigstens eine Abmessung (x, xᵢₛₜ) des wenigstens einen Produkt-Stücks im gepressten Zustand längs der ersten Pressrichtung (L) umfassen.

4. Aufschneidemaschine nach einem der vorhergehenden Ansprüche, **dadurch gekennzeichnet, dass** die Pressvorrichtung (102) ferner dazu eingerichtet ist, das wenigstens eine Produkt-Stück (P) längs einer zweiten Pressrichtung (Q) zu pressen, welche vorzugsweise im Wesentlichen orthogonal zu der ersten Pressrichtung (L) verläuft.

5. Aufschneidemaschine nach Anspruch 4,
**dadurch gekennzeichnet, dass** die Steuereinheit (136) dazu eingerichtet ist, dann, wenn das gemessene Gewicht um mehr als den vorbestimmten Betrag von dem berechneten Gewicht abweicht, die Pressvorrichtung (102) derart anzusteuern, dass das Produkt-Stück (P) längs der ersten Pressrichtung (L) und/oder der zweiten Pressrichtung (Q) zusätzlich gepresst oder entgegen der ersten Pressrichtung (L) und/oder der zweiten Pressrichtung (Q) entlastet wird.

6. Aufschneidemaschine nach Anspruch 4 oder 5,
**dadurch gekennzeichnet, dass** die Pressvorrichtung (102) ferner dazu eingerichtet ist, das wenigstens eine Produkt-Stück (P) längs einer dritten Pressrichtung (B) zu pressen, welche vorzugsweise im Wesentlichen orthogonal zu der ersten Pressrichtung (L) und/oder zu der zweiten Pressrichtung (Q) verläuft.

7. Aufschneidemaschine nach Anspruch 6,
**dadurch gekennzeichnet, dass** die Steuereinheit (136) dazu eingerichtet ist, dann, wenn das gemessene Gewicht um mehr als den vorbestimmten Betrag von dem berechneten Gewicht abweicht, die Pressvorrichtung (102) derart anzusteuern, dass das Produkt-Stück (P) längs der ersten Pressrichtung (L) und/oder der zweiten Pressrichtung (Q) und/oder der dritten Pressrichtung (B) zusätzlich gepresst oder entgegen der ersten Pressrichtung (L) und/oder der zweiten Pressrichtung (Q) und/oder der dritten Pressrichtung (B) entlastet wird.

8. Aufschneidemaschine nach einem der vorhergehenden Ansprüche, **dadurch gekennzeichnet, dass** die Pressvorrichtung (102) dazu eingerichtet ist, das wenigstens eine Produkt-Stück (P) mit einer vorbestimmten ersten Kraft entlang der ersten Pressrichtung (L) und/oder mit einer vorbestimmten zweiten Kraft entlang der zweiten Pressrichtung (Q) und/oder mit einer vorbestimmten dritten Kraft entlang der dritten Pressrichtung (B) zu pressen, bevor die Steuereinheit (136) eine Abweichung zwischen dem gemessenen Gewicht und dem erfassten Gewicht bestimmt.

9. Aufschneidemaschine nach Anspruch 8,
**dadurch gekennzeichnet, dass** die Pressvorrichtung (102) dazu eingerichtet ist, das wenigstens eine Produkt-Stück (P) so lange mit der vorbestimmten ersten Kraft entlang der ersten Pressrichtung (L) und/oder mit der vorbestimmten zweiten Kraft entlang der zweiten Pressrichtung (Q) und/oder mit der vorbestimmten dritten Kraft entlang der dritten Pressrichtung (B) zu pressen, bis sich eine Abmessung (x, xᵢₛₜ) des wenigstens einen Produkt-Stücks (P) entlang der ersten Pressrichtung (L) und/oder entlang der zweiten Pressrichtung (Q) und/oder entlang der dritten Pressrichtung (B) nur noch maximal um einen vorbestimmten Betrag pro Zeiteinheit ändert.

10. Aufschneidemaschine nach einem der vorhergehenden Ansprüche, **dadurch gekennzeichnet, dass** die Pressvorrichtung (102)
eine erste Presseinheit (104) umfasst, welche dazu eingerichtet ist, das wenigstens eine Produkt-Stück (P) längs der ersten Pressrichtung (L) zu pressen, und/oder
eine zweite Presseinheit (110) umfasst, welche dazu eingerichtet ist, das wenigstens eine Produkt-Stück (P) längs der zweiten Pressrichtung (Q) zu pressen,
und/oder
eine dritte Presseinheit (112b1, 112b2) umfasst, welche dazu eingerichtet ist, das wenigstens eine Produkt-Stück (P) längs der dritten Pressrichtung (B) zu pressen.

11. Aufschneidemaschine nach einem der vorhergehenden Ansprüche, **dadurch gekennzeichnet, dass** die Pressvorrichtung (102) ein Formrohr (112) umfasst, welches dazu eingerichtet ist, das wenigstens eine Produkt-Stück (P) darin aufzunehmen.

12. Aufschneidemaschine nach Anspruch 11,
**dadurch gekennzeichnet, dass** das Formrohr (112) wenigstens zwei Formrohrhälften (112a, 112b) umfasst, nämlich eine erste Formrohrhälfte (112a) und eine der ersten Formrohrhälfte (112a) entgegengesetzt anordenbare zweite Formrohrhälfte (112b), wobei die erste Formrohrhälfte (112a) relativ zu der zweiten Formrohrhälfte (112b) bewegbar ist oder umgekehrt.

13. Aufschneidemaschine nach Anspruch 12,
**dadurch gekennzeichnet, dass** das Formrohr (112) eine Presseinheit, vorzugsweise die zweite Presseinheit (110), der Pressvorrichtung (102) bildet.

14. Aufschneidemaschine nach einem der vorhergehenden Ansprüche, **dadurch gekennzeichnet, dass** die Messvorrichtung (119) als eine Wiegevorrichtung ausgebildet ist.

15. Aufschneidemaschine nach einem der Ansprüche 1 bis 13,
**dadurch gekennzeichnet, dass** die Messvorrichtung (119) als eine Scan-Vorrichtung ausgebildet ist.
